# EUROPEAN PATENT APPLICATION

(11) **EP 4 818 290 A1**
(43) Date of publication of application: **07.10.2026**
(21) Application number: 24898216.7
(22) Date of filing: 29.11.2024
(51) Int. Cl.: C10G 11/02, C10G 11/08, C10G 11/10, B01J 27/12, B01J 35/50, B01J 37/08

(54) **NOVEL REFINING APPARATUS UTILIZING HIGH-VISCOSITY CRUDE OIL SLUDGE**

(30) Priority: 29.11.2023 KR 20230169062
(71) Applicant: Jeong Heung Je Laboratory.Inc., Gimpo-si, Gyeonggi-do 10009 (KR)
(72) Inventor: JEONG, Yeong Hun, Seoul 03010 (KR)
(74) Representative: Jung, Minkyu
(86) International application number: PCT/KR2024/019314
(87) International publication number: WO 2025/116622

(57) **Abstract**

A high-viscosity crude oil sludge refining apparatus according to the present invention comprises: a decomposition furnace that generates oil vapor by breaking down carbon-carbon bonds in atmospheric residue having a boiling point of 350°C or more generated in an atmospheric distillation process and evaporating the resulting components; and a condenser that produces liquid heavy oil by cooling the oil vapor generated in the decomposition furnace, through heat exchange.

## Description

### [Technical Field]

The present disclosure relates to a novel refining apparatus utilizing high-viscosity crude oil sludge discharged from a crude distillation unit (CDU), and more specifically, to a refining apparatus capable of obtaining light oil from high-viscosity crude oil sludge using a ceramic catalyst.

### [Background Art]

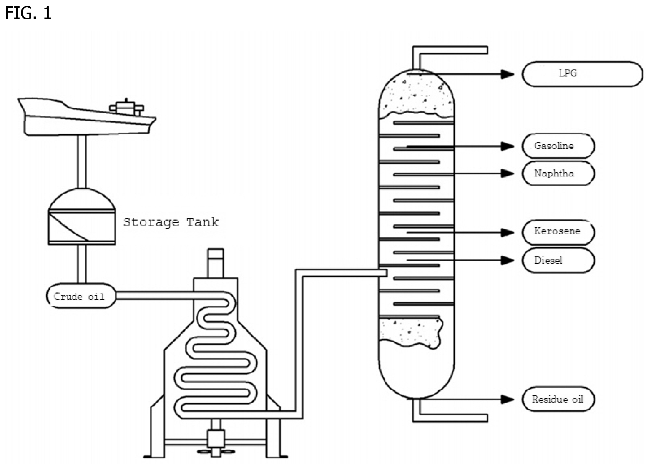

Crude oil may be separated into various petroleum products through a crude distillation unit (CDU). The crude distillation unit (CDU) is a process unit for separating crude oil, the main component of which is hydrocarbons, under atmospheric pressure based on differences in boiling points, and such a conventional atmospheric distillation unit is illustrated in FIG. 1.

As illustrated in FIG. 1, high value-added materials such as liquefied petroleum gas (LPG), gasoline, naphtha, kerosene, and diesel may be separated from crude oil through the crude distillation unit (CDU). In contrast, atmospheric residue (AR), which is not distilled due to having a high boiling point of 350°C or above, remains in a lower portion. The atmospheric residue (AR) may be blended with bunker-C oil and sold. However, the atmospheric residue has low added value and is generated in a large quantity, making disposal thereof difficult. Furthermore, when the atmospheric residue (AR) is heated to 350°C or higher, oils having high boiling points are not boiled off and separated, but rather undergo pyrolysis, thereby generating large amounts of impurities such as coke.

Accordingly, oil refinery companies have developed upgrading processes capable of additionally producing high value-added products such as LPG, gasoline, kerosene, and diesel from atmospheric residue (AR) without further increasing the temperature. Examples of such upgrading processes include a vacuum distillation unit (VDU), hydro-cracking, and fluid catalytic cracking (FCC).

The vacuum distillation unit (VDU) is a process unit for distilling substances having high boiling points, such as atmospheric residue (AR), under reduced-pressure conditions. The process unit utilizes the property whereby a boiling point decreases as pressure decreases, thereby enabling distillation even at relatively lower temperatures. In this case, high value-added vacuum gas oil (VGO) may be obtained from the atmospheric residue (AR). However, the vacuum distillation unit (VDU) has disadvantages in that separate vacuum equipment is required to maintain a low-pressure state, and hydro-cracking or fluid catalytic cracking processes must additionally be performed in order to process vacuum residue (VR) remaining after the process.

Hydrocracking is a process in which carbon-carbon bonds are cracked by adding high-purity hydrogen under high-temperature and high-pressure conditions, and can produce high-quality diesel because benzene rings can be cracked. Moreover, since the added hydrogen removes coke generated during the cracking process, coke does not accumulate. However, hydrocracking has disadvantages in that high-purity hydrogen is expensive, and installation and maintenance costs for facilities required to maintain high-temperature and high-pressure conditions are substantial.

The fluid catalytic cracking (FCC) is a process for producing light oil having a high octane number by breaking long carbon chains contained in atmospheric residue (AR) using a catalyst. In particular, the process is characterized in that cracking efficiency is improved by bringing heated atmospheric residue (AR) vapor into contact with a powdered catalyst in a fluidized state. However, the fluid catalytic cracking (FCC) also has disadvantages in that coke may be generated because the atmospheric residue (AR) is heated to a temperature higher than its boiling point, and catalyst regeneration equipment is necessarily required.

### [Disclosure]

### [Technical Problem]

The present disclosure has been made to solve the above-mentioned problems occurring in the prior art, and it is an object of the present disclosure to provide a novel refining apparatus capable of producing high value-added light oil by decomposing carbon-carbon bonds of high-viscosity crude oil sludge, such as atmospheric residue (AR), using wave energy radiated from a catalyst.

In particular, another object of the present disclosure is to provide a novel refining apparatus capable of obtaining high value-added light oil from high-viscosity crude oil sludge using a catalyst that does not require a regeneration process.

Moreover, a further object of the present disclosure is to provide a novel refining apparatus capable of decomposing high-viscosity crude oil sludge in a low-temperature range without using a large amount of expensive catalyst materials such as hydrogen or platinum (Pt).

However, the objects to be achieved by the present disclosure are not limited to those described above, and may be variously expanded within the spirit and scope of the present disclosure.

### [Technical Solution]

To accomplish the above-mentioned objects, according to the present disclosure, there is provided a high-viscosity crude oil sludge refining apparatus including: a decomposition furnace configured to crack carbon-carbon bonds of atmospheric residue having a boiling point of 350°C or higher, produced in a crude distillation unit, and vaporize the atmospheric residue to generate oil vapor; and a condenser configured to cool the oil vapor generated in the decomposition furnace through heat exchange to produce liquid-state heavy oil. In this case, the decomposition furnace may include: a housing having a decomposition space therein for accommodating the atmospheric residue, the decomposition space being selectively opened and closed by a door; catalyst units installed on sidewalls of the housing and having a plurality of ceramic catalysts configured to radiate wave energy having a short wavelength band at a temperature within a range of 80°C to 350°C to physically crack the carbon-carbon bonds of the atmospheric residue; and a plurality of heating wires installed inside the housing and configured to heat the atmospheric residue and the catalyst units by radiating heat using electrical energy. Moreover, the ceramic catalysts may include at least one ceramic powder selected from Al₂O₃, ZrO₂, and MgO, at least one fluoride powder selected from LiF, MgF₂, and CaF_{2,} and at least one phosphor material selected from terbium (Tb), cerium (Ce), europium (Eu), and dysprosium (Dy).

In an embodiment, the ceramic catalysts may be manufactured by mixing the ceramic powder, the fluoride powder, and the thermoluminescent rare-earth phosphor material, additionally adding a small amount of metallic catalyst material as necessary to form a molded body, and sintering the molded body within a temperature range of 1300°C to 1450°C.

For example, the ceramic catalysts may include metallic catalysts such as palladium (Pd), vanadium oxide (VOx), and titanium oxide (TiOx) in order to enhance a low-temperature decomposition reaction.

In an embodiment, the ceramic catalysts may radiate energy ranging from 200 kJ/mol to 400 kJ/mol.

In an embodiment, the heavy oil produced in the condenser may have a carbon number of 24 to 60.

In an embodiment, the high-viscosity crude oil sludge refining apparatus may further include a blower configured to forcibly discharge heated air into the decomposition space heated by the heating wires, cool the discharged heated air through heat exchange with the condenser, and resupply the cooled air into the decomposition space.

In this case, the high-viscosity crude oil sludge refining apparatus may further include: a sensor unit configured to monitor internal pressure of the decomposition furnace; a gas tank storing inert gas; and a control unit configured to receive pressure information measured by the sensor unit and selectively supply the inert gas stored in the gas tank into the decomposition furnace when pressure of the decomposition furnace falls below a predetermined pressure due to operation of the blower.

In order to achieve the above-described objects of the present invention, a high-viscosity crude oil sludge refining apparatus according to another embodiment of the present invention may include: a wavelength decomposition unit configured to produce heavy oil having a carbon number of 24 to 60 by physically cracking carbon-carbon bonds of atmospheric residue having a boiling point of 350°C or higher, produced in a crude distillation unit, using wave energy having a short wavelength band radiated from catalysts heated within a range of 80°C to 350°C; and a separation refining unit configured to produce light oil having a carbon number of 10 to 18 from the heavy oil by simultaneously performing physical cracking by the catalysts on the heavy oil and catalytic cracking through direct contact between the catalysts and the heavy oil.

In this case, the catalysts may include at least one ceramic powder selected from Al₂O₃, ZrO₂, and MgO, at least one fluoride powder selected from LiF, MgF₂, and CaF₂, and at least one phosphor material selected from terbium (Tb), cerium (Ce), europium (Eu), and dysprosium (Dy). Additionally, the catalysts may radiate wave energy having a short wavelength band within a range of 80°C to 350°C to crack the carbon-carbon bonds of the atmospheric residue and the heavy oil.

In an embodiment, the wavelength decomposition unit may include: a decomposition furnace configured to crack and vaporize the carbon-carbon bonds of the atmospheric residue using the catalysts to generate oil vapor; a condenser configured to cool the oil vapor generated in the decomposition furnace through heat exchange to produce liquid-state heavy oil; and an oil-water separator configured to remove moisture contained in the heavy oil produced in the condenser.

In this case, the decomposition furnace may include: a housing having a decomposition space therein for accommodating the atmospheric residue, the decomposition space being selectively opened and closed by a door; catalyst units installed on sidewalls of the housing and having a plurality of ceramic catalysts configured to radiate wave energy having a wavelength of 200 nm to 700 nm within a range of 80°C to 350°C to physically crack the carbon-carbon bonds of the atmospheric residue; a plurality of heating wires installed inside the housing and configured to heat the atmospheric residue and the catalyst units by radiating heat using electrical energy; and a blower configured to forcibly discharge heated air into the decomposition space heated by the heating wires, cool the discharged heated air through heat exchange with the condenser, and resupply the cooled air into the decomposition space.

In an embodiment, the decomposition furnace may further include: a sensor unit configured to monitor internal pressure of the decomposition furnace; a gas tank storing inert gas; and a control unit configured to receive pressure information measured by the sensor unit and selectively supply the inert gas stored in the gas tank into the decomposition furnace when pressure of the decomposition furnace falls below a predetermined pressure due to operation of the blower.

In an embodiment, the separation refining unit may include: an agitated oil vapor unit configured to generate oil vapor from the heavy oil produced in the wavelength decomposition unit; and a first refiner and a second refiner configured to refine and condense the oil vapor generated in the agitated oil vapor unit to produce light oil.

In this case, the agitated oil vapor unit may include: an agitation tank configured to accommodate the heavy oil therein and having an inner bottom surface of a conical shape in which a height thereof gradually decreases from a central portion toward an edge portion thereof; agitation blades rotatably connected to a rotating shaft penetrating a center of the agitation tank to agitate the heavy oil, wherein ceramic catalysts are additionally provided on the shaft of an agitation facility; ceramic catalysts additionally provided on a shaft of an agitation facility and configured to radiate wave energy having a short wavelength band within a range of 80°C to 350°C; and a heater configured to heat the heavy oil and the ceramic catalysts.

In an embodiment, the first refiner may include: an oil vapor inlet provided at a lower portion of the first refiner housing and configured to receive the oil vapor generated in the agitated oil vapor unit; a plurality of catalyst accommodation chambers sequentially stacked upward from the oil vapor inlet and having ceramic catalysts configured to radiate wave energy having a short wavelength band within a range of 80°C to 350°C; and an outlet configured to supply oil liquefied while passing through the plurality of catalyst accommodation chambers to the second refiner. In this case, the oil vapor introduced into the catalyst accommodation chambers may come into direct contact with the ceramic catalysts.

In an embodiment, the second refiner may include: a second refiner housing defining an outer appearance thereof; an inlet pipe penetrating an upper surface of the second refiner housing, extending vertically downward, and configured to receive liquefied oil from the first refiner; a plurality of ceramic catalysts provided outside the inlet pipe, filling the interior of the second refiner housing, and configured to radiate wave energy having a short wavelength band within a range of 80°C to 350°C; and a heater configured to heat the liquefied oil and the ceramic catalysts. In this case, the liquefied oil supplied through the inlet pipe may come into direct contact with the ceramic catalysts.

### [Advantageous Effects]

The high-viscosity crude oil sludge refining apparatus according to exemplary embodiments of the present disclosure is capable of producing high value-added light oil by cracking carbon-carbon bonds of high-viscosity crude oil sludge, such as atmospheric residue (AR), using wave energy radiated from a catalyst. In particular, the high-viscosity crude oil sludge refining apparatus does not require regeneration of the catalyst since utilizing physical cracking using the catalyst, and is environmentally friendly because fossil fuels are not used. Furthermore, the high-viscosity crude oil sludge refining apparatus does not use expensive materials such as high-purity hydrogen, and has excellent economic efficiency because light oil may be produced even within a low-temperature range of about 80°C to 350°C.

### [Description of Drawings]

FIG. 1 is a view illustrating a crude distillation unit.
FIG. 2 is a block diagram illustrating a high-viscosity crude oil sludge refining apparatus according to an embodiment of the present disclosure.
FIG. 3 is a cross-sectional view illustrating a decomposition furnace of FIG. 2.
FIG. 4 is a block diagram for showing a cooling process of the decomposition furnace of FIG. 2.
FIG. 5 is a view illustrating a separation refining unit of FIG. 2.
FIG. 6 is a view illustrating an agitated oil vapor unit of FIG. 5.
FIG. 7 is a view illustrating a first refiner of FIG. 5.
FIG. 8 is a view illustrating a second refiner of FIG. 5.

### [Mode for Invention]

With respect to embodiments of the present disclosure, specific structural and functional descriptions are merely illustrative for the purpose of describing the embodiments of the present disclosure. Accordingly, the embodiments of the present disclosure may be implemented in various forms and should not be construed as being limited to the embodiments described herein.

The present disclosure may be embodied in various modifications and alternative forms, and may have various embodiments. Therefore, specific embodiments are illustrated in the drawings and will be described in detail herein. However, this is not intended to limit the present disclosure to the specific disclosed forms, and it should be understood that all modifications, equivalents, and substitutes falling within the spirit and technical scope of the present disclosure are included therein.

It will be understood that terms, such as "first" or "second" may be used in the specification to describe various components but are not restricted to the above terms. The terms may be used to discriminate one component from another component. For instance, the first component may be named as the second component, and on the contrary, the second component may be also named as the first component within the scope of the present disclosure.

It will be understood that when an element is referred to as being "coupled" or "connected" to another element, it can be directly coupled or connected to the other element or intervening elements may be present therebetween. In contrast, it should be understood that when an element is referred to as being "directly coupled" or "directly connected" to another element, there are no intervening elements present. Other expressions that explain the relationship between elements, such as "between," "directly between," "adjacent to," or "directly adjacent to," should be construed in the same way.

The terminology used herein is for the purpose of describing particular embodiments only and is not intended to be limiting. The singular forms are intended to include the plural forms as well, unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Unless otherwise defined, all terms (including technical and scientific terms) used herein have the same meaning as commonly understood by those skilled in the technical field to which the present disclosure pertains. It will be further understood that terms, such as those defined in commonly used dictionaries, should not be interpreted in an idealized or overly formal sense unless expressly so defined herein.

Hereinafter, preferred embodiments of the present disclosure will be described in detail with reference to the accompanying drawings. Like reference numerals denote like elements throughout the drawings, and redundant descriptions of identical elements will be omitted.

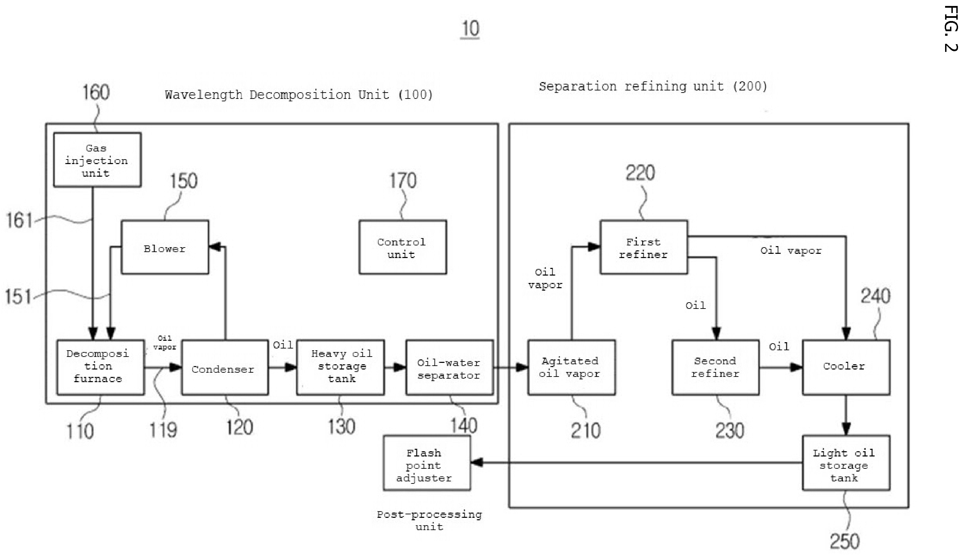

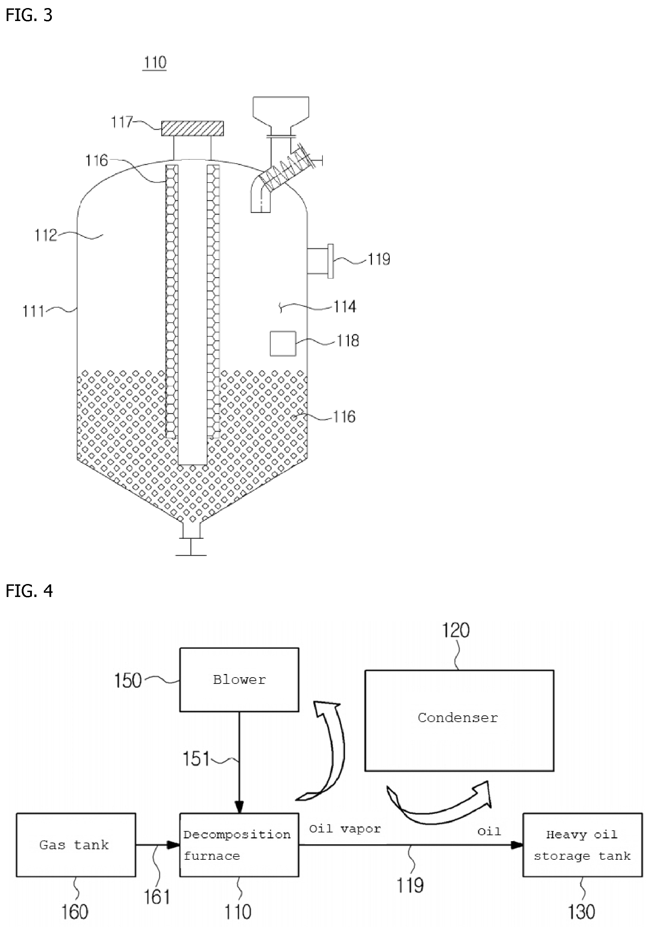

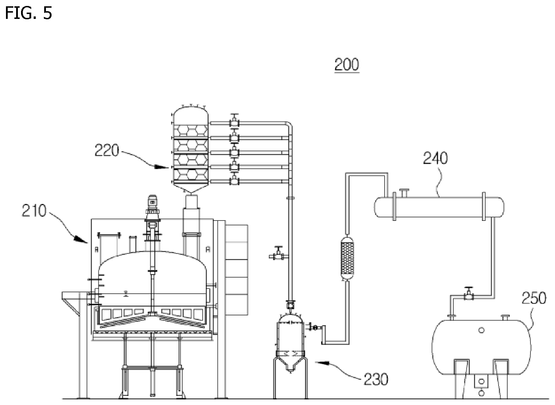

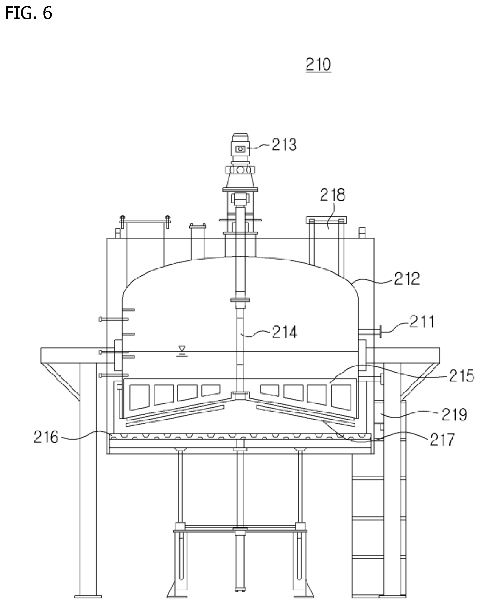

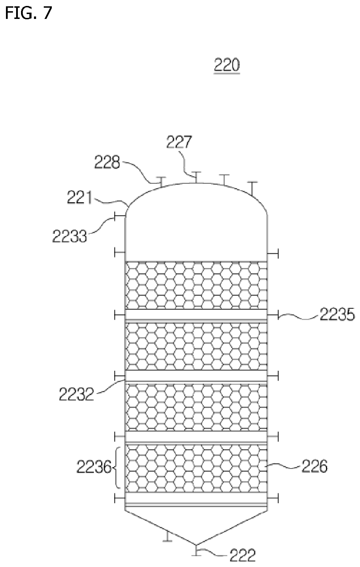

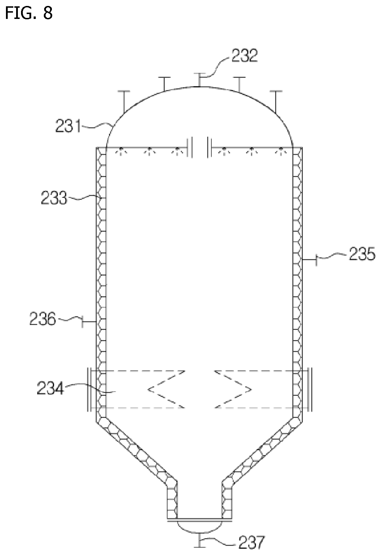

FIG. 2 is a block diagram illustrating a high-viscosity crude oil sludge refining apparatus according to an embodiment of the present disclosure, FIG. 3 is a cross-sectional view illustrating a decomposition furnace of FIG. 2, FIG. 4 is a block diagram for showing a cooling process of the decomposition furnace of FIG. 2, FIG. 5 is a view illustrating a separation refining unit of FIG. 2, FIG. 6 is a view illustrating an agitated oil vapor unit of FIG. 5, FIG. 7 is a view illustrating a first refiner of FIG. 5, and FIG. 8 is a view illustrating a second refiner of FIG. 5.

Meanwhile, in the present disclosure, the term "high-viscosity crude oil sludge" may include all high-viscosity materials having a boiling point of 350°C or higher and a high hydrocarbon content, such as atmospheric residue (AR) produced in a crude distillation unit (CDU) and vacuum residue (VR) produced in a vacuum distillation unit (VDU). Moreover, the high-viscosity crude oil sludge may be in a liquid state or a solid state. Hereinafter, for convenience of description, only a case in which the high-viscosity crude oil sludge is atmospheric residue (AR) in a liquid state will be described.

Referring to FIGS. 2 to 8, the high-viscosity crude oil sludge refining apparatus 10 according to the present disclosure may include: a wavelength decomposition unit 100 configured to produce heavy oil C₂₄ to C₆₀ by cracking hydrocarbon bonds of high-viscosity crude oil sludge; a separation refining unit 200 configured to refine the produced heavy oil to produce light oil C₁₀ to C₁₈; and a post-processing unit 300 configured to improve the added value of the produced light oil or additionally process the produced light oil according to an intended use thereof.

The wavelength decomposition unit 100 may crack hydrocarbon bonds of the high-viscosity crude oil sludge using wave energy radiated from a catalyst. In particular, the wavelength decomposition unit 100 is environmentally friendly in that heating is performed using electrical energy instead of fossil fuels, and is characterized in that the heating temperature range is relatively low, namely about 80°C to 350°C. Additionally, by employing a physical cracking method in which hydrocarbon bonds of the high-viscosity crude oil sludge are physically cracked using wave energy radiated from catalysts, the wavelength decomposition unit 100 does not require regeneration of the catalysts and allows the catalysts to be used semi-permanently. Furthermore, by employing a batch process, the wavelength decomposition unit 100 has advantages in that operational stability is excellent and a conversion rate of the high-viscosity crude oil sludge into heavy oil is high. Meanwhile, although a general batch process has a disadvantage in that cooling time is required after one process cycle is completed, the wavelength decomposition unit 100 according to the present disclosure may significantly reduce the cooling time through air circulation using the blower 150. Hereinafter, the wavelength decomposition unit 100 will be described in more detail.

As illustrated in FIG. 3, the wavelength decomposition unit 100 may include: a decomposition furnace 110 configured to generate heavy-oil vapor by cracking carbon bonds of the high-viscosity crude oil sludge; a condenser 120 configured to cool the heavy-oil vapor to generate liquid-state heavy oil; a heavy oil storage tank 130 configured to store the heavy oil; an oil-water separator 140 configured to remove moisture contained in the heavy oil; a blower 150 configured to forcibly circulate air inside the decomposition furnace 110 to rapidly cool the decomposition furnace 110; a gas injection unit 160 configured to supply gas in order to prevent internal pressure of the decomposition furnace 110 from dropping below a preset pressure; and a control unit 170 configured to control operations of the respective devices.

First, the decomposition furnace 110 may include: a housing 111 having a decomposition space 112 therein; a door 117 configured to selectively open and close the decomposition space 112; an accommodation unit 114 configured to accommodate the high-viscosity crude oil sludge; a plurality of catalyst units 116 accommodating catalysts which radiate wave energy when heated; a plurality of heating wires (not shown) which supply heat to the high-viscosity crude oil sludge and the catalysts; a sensor unit 118 configured to monitor an internal state of the housing 111; and an oil vapor outlet 119 configured to discharge oil vapor generated from the high-viscosity crude oil sludge.

The housing 111 may have a decomposition space 112 therein for accommodating the high-viscosity crude oil sludge to crack hydrocarbon bonds thereof. The door 117 may be provided on one side of the housing 111, and the decomposition space 112 may be selectively exposed to the outside according to opening and closing of the door 117. When the door 117 is opened and the decomposition space 112 is exposed to the outside, the accommodation unit 114 accommodating the high-viscosity crude oil sludge may be inserted into the housing 111, and after completion of the reaction, the accommodation unit 114 may be withdrawn to the outside through the opened door 117. Meanwhile, the accommodation unit 114 may have various forms, such as a wheeled cart or a tank. For example, when the high-viscosity crude oil sludge is in a gel state or a solid state, the accommodation unit 114 may be a cart, and rails (not shown) for smooth movement of the accommodation unit 114 may be further provided. Alternatively, when the high-viscosity crude oil sludge is in a liquid state, the accommodation unit 114 may have a tank shape including an opening/closing portion. Alternatively, atmospheric residue in a liquid state or gel state may be directly supplied into the housing 111 through the door 117. Meanwhile, oil vapor generated from the high-viscosity crude oil sludge may be discharged to the outside of the housing 111 sequentially through the opening/closing portion and the oil vapor outlet 119.

The plurality of catalyst units 116 and the heating wires may be installed on a sidewall of the housing 111 or inside the housing 111. Although FIG. 3 illustrates the catalyst units 116 inserted into the housing 111 in a cylindrical shape, the present disclosure is not limited thereto. For example, the catalyst units 116 may be installed on an inner surface of a sidewall of the housing 111, inside the sidewall thereof, inside the door 117, or the like.

Meanwhile, although the heating wires are not specifically illustrated in FIG. 3, the heating wires may be installed in various numbers and at various positions as necessary. For example, the plurality of heating wires may be arranged inside the housing 111 so as to be spaced apart from each other in a direction parallel to the ground. Alternatively, the heating wires may be installed to be in contact with the inner surface of the housing 111 or penetrate the sidewall thereof, and may extend in various directions such as a direction perpendicular to the ground.

Various tubes communicating with the decomposition space 112 through the sidewall of the housing 111 may be connected to the housing 111. Specifically, an air supply pipe 151 and an air discharge pipe (not shown) connected to the blower 150, a gas supply pipe 161 connected to the gas injection unit 160, and the oil vapor outlet 119 connected to the condenser 120 may penetrate the sidewall of the housing 111 and be connected to the decomposition space 112.

The catalyst units 116 may accommodate a plurality of ceramic catalysts. The ceramic catalysts may include ceramic powder, fluoride powder, and thermoluminescent rare-earth phosphor materials.

The ceramic powder may include at least one ceramic powder selected from Al₂O₃, ZrO₂, and MgO. The fluoride powder may include at least one fluoride powder selected from LiF, MgF₂, and CaF₂. The thermoluminescent rare-earth phosphor material may include at least one phosphor material selected from terbium (Tb), cerium (Ce), europium (Eu), and dysprosium (Dy). The ceramic catalyst may be manufactured by mixing the ceramic powder, the fluoride powder, and the thermoluminescent rare-earth phosphor material to form a molded body, and sintering the molded body within a temperature range of 1300°C to 1450°C.

In one embodiment, the ceramic catalyst may further include at least one metallic catalyst, such as palladium (Pd), vanadium oxide (VOx), and titanium oxide (TiOx), in order to enhance a low-temperature decomposition reaction.

The ceramic catalyst may radiate wave energy having a short wavelength band at a temperature of about 80°C to 350°C due to thermoluminescent characteristics thereof. For example, the ceramic catalyst may radiate wave energy having a broad wavelength band of about 200 nm to 700 nm within a temperature range of about 80°C to 350°C. The wave energy may exist discontinuously over the broad wavelength band and may be a pulse wave having strong wave energy. In this case, the pulse wave may have wave energy of approximately 200 kJ/mol to 400 kJ/mol. Such wave energy also includes a wavelength region having energy greater than 347 kJ/mol, which is the energy of a carbon-carbon single bond (C-C). Accordingly, the wave energy radiated from the ceramic catalyst may physically crack the carbon-carbon bonds of the high-viscosity crude oil sludge stored in the accommodation unit 114.

The heating wires may be installed in plural on the sidewall of the housing 111 or inside the housing 111, and may radiate heat by electrical supply. Specifically, the heating wires may receive electrical energy from the outside to heat the ceramic catalysts accommodated in the catalyst units 116 to about 80°C to 350°C. Accordingly, wave energy having a broad wavelength band may be radiated from the ceramic catalysts. Furthermore, the heating wires may directly transfer thermal energy to the high-viscosity crude oil sludge accommodated in the accommodation unit 114.

As described above, the molecular weight of the high-viscosity crude oil sludge may be reduced as carbon-carbon bonds thereof are broken by the wave energy radiated from the heated ceramic catalysts. Accordingly, even when the heating wires heat the high-viscosity crude oil sludge to a relatively low temperature, a portion of the heavy oil cracked from the high-viscosity crude oil sludge may be vaporized and converted into an oil vapor state. The generated oil vapor may be discharged to the condenser 120 through the oil vapor outlet 119.

The sensor unit 118 may monitor an internal state of the housing 111 and may include a temperature sensor, a pressure sensor, or the like. State information measured by the sensor unit 118 may be transmitted to the control unit 170, and the control unit 170 may control operation of the wavelength decomposition unit 100 based on the received state information. For example, the control unit 170 may determine an opening/closing state of the door 117 based on a measured value of the pressure sensor, and when the door 117 is not properly closed, may output a warning signal to a user through an alarm or the like. In addition, during a process of cooling the inside of the housing 111, the control unit 170 may monitor the measured value of the pressure sensor and selectively open and close the gas supply pipe 161, thereby preventing pressure in the decomposition space 112 from excessively decreasing.

The carbon-carbon bonds of the high-viscosity crude oil sludge stored in the accommodation unit 114 may be broken by heating through the heating wires and wave energy radiated from the catalyst units 116. Accordingly, a portion of the high-viscosity crude oil sludge may be converted into heavy oil and vaporized into an oil vapor state. The oil vapor may be discharged to the condenser 120 through the oil vapor outlet 119 formed at an upper portion of the housing 111. A portion of the high-viscosity crude oil sludge that is not discharged in the form of oil vapor may remain in the accommodation unit 114 and may be discharged to the outside through the door 117 after completion of the cracking reaction. Meanwhile, the heavy oil herein may be oil having a carbon number of C₂₄ to C₆₀.

Meanwhile, light oil C₁₀ to C₁₈ may also be directly generated in the wavelength decomposition unit 100. Since the catalyst units 116 function to crack the carbon-carbon bonds, the material introduced into the accommodation unit 114 may be directly converted into light oil instead of heavy oil depending on properties thereof.

The condenser 120 may cool and liquefy the heavy oil in the oil vapor state discharged from the oil vapor outlet 119 of the decomposition furnace 110. For example, the condenser 120 may be a heat exchanger. The liquefied heavy oil may be accommodated in the heavy oil storage tank 130, and moisture may be removed therefrom while passing through the oil-water separator 140.

Meanwhile, since the decomposition furnace 110 of the present disclosure is of a batch type, a process for cooling the decomposition furnace 110 is required after completion of the decomposition process for the high-viscosity crude oil sludge accommodated in the accommodation unit 114. After the decomposition furnace 110 is completely cooled to room temperature, the door 117 may be opened and the accommodation unit 114 may be discharged to the outside, and thereafter new high-viscosity crude oil sludge may be supplied into the housing 111 so that the decomposition process may be performed again. In this case, conventional batch-type decomposition furnaces are generally cooled to room temperature through natural cooling, thereby requiring a long cooling time and consequently lowering productivity of the high-viscosity crude oil sludge refining apparatus 10. In the present disclosure, the cooling rate may be significantly improved by forcibly circulating air inside the housing 111.

Specifically, the blower 150 may forcibly circulate air in the decomposition space 112 of the housing 111. When the blower 150 operates, hot air filling the decomposition space 112 may move to the condenser 120 through the air discharge pipe connected to the condenser 120 and may be cooled through heat exchange in the condenser 120. The cooled air may move back into the decomposition space 112 through the air supply pipe 151, thereby rapidly cooling the housing 111. Such forced circulation through operation of the blower 150 may be performed by the control unit 170.

Meanwhile, when the air inside the decomposition space 112 is rapidly discharged due to operation of the blower 150, pressure inside the decomposition space 112 may rapidly decrease. When the pressure inside the decomposition space 112 falls below a predetermined pressure, the decomposition furnace 110 may be physically damaged. In order to prevent the damage of the decomposition furnace, the sensor unit 118 may continuously monitor the internal pressure. When the pressure inside the decomposition space 112 falls below the predetermined pressure, the control unit 170 may open the gas supply pipe 161 to supply the gas stored in the gas injection unit 160 into the decomposition space 112. In this case, the gas may be, for example, an inert gas such as nitrogen.

As described above, the wavelength decomposition unit 100 according to the present disclosure may rapidly cool the decomposition furnace 110, thereby significantly improving productivity of the high-viscosity crude oil sludge refining apparatus 10. In addition, the wavelength decomposition unit 100 may prevent formation of a vacuum inside the decomposition furnace 110, thereby preventing damage to the decomposition furnace 110 caused by pressure reduction due to forced air circulation.

The heavy oil produced in the wavelength decomposition unit 100 may be converted into light oil in the separation refining unit 200. In this case, the wavelength decomposition unit 100 may physically crack the carbon-carbon bonds using the wave energy radiated from the ceramic catalysts. The separation refining unit 200 described below may simultaneously perform not only physical cracking using the wave energy radiated from the ceramic catalysts but also catalytic cracking through direct contact between the ceramic catalysts and the oil. Accordingly, light oil having a high octane number may be obtained from the heavy oil. Hereinafter, a process of obtaining light oil in the separation refining unit 200 will be described in more detail with reference to FIGS. 5 to 8.

As illustrated in FIG. 5, the separation refining unit 200 may include: an agitated oil vapor unit 210 configured to generate oil vapor from the heavy oil; a first refiner 220 and a second refiner 230 configured to refine and condense the oil vapor to generate the light oil; a cooler 240 configured to remove moisture from the light oil passing through the refiners 220 and 230; and a light oil storage tank 250 configured to store the generated light oil.

As illustrated in FIG. 6, the agitated oil vapor unit 210 may include: a heavy oil inlet 211 through which the heavy oil produced in the wavelength decomposition unit 100 is introduced; an agitation tank 212 configured to accommodate the heavy oil therein; an agitation blade 215 configured to agitate the heavy oil while rotating about a rotation shaft 214; a ceramic catalyst 216 configured to radiate wave energy having a short wavelength band within a range of about 80°C to 350°C; a heater 217 configured to heat the heavy oil and the ceramic catalyst 216; an oil vapor discharge pipe 218 configured to discharge oil vapor generated from the heavy oil to the first refiner 220; and a sludge discharge pipe 219 configured to discharge sludge to the outside.

The agitation tank 212 may have a space therein capable of accommodating the heavy oil, and the rotation shaft 214 connected to the motor 213 may be installed at the center thereof. The plurality of agitation blades 215 may be rotatably attached to a lower portion of the rotation shaft 214, and rotational force of the motor 213 may be transmitted to the agitation blades 215 through the rotation shaft 214.

An inner bottom surface of the agitation tank 212 may have a conical shape in which a height thereof gradually decreases from a center portion toward an edge portion. In this case, heavy components such as sludge may rapidly move toward an edge portion of the agitation tank 212 due to gravity, and rotation of the agitation blades 215 may accelerate such movement. Accordingly, heavy components such as sludge may be easily discharged through the sludge discharge pipe 219 connected to the edge portion of the bottom surface of the agitation tank 212.

The ceramic catalyst 216 may be provided at a lower portion of the agitation tank 212 or inside a sidewall thereof, and may have a plate shape or a spherical shape. The ceramic catalyst 216 may be substantially identical to the ceramic catalyst accommodated in the catalyst units 116 of the wavelength decomposition unit 100 described above. That is, the ceramic catalyst 216 may radiate wave energy having a short wavelength band at a temperature of about 80°C to 350°C due to thermoluminescent characteristics thereof, and the wave energy may crack the carbon-carbon bonds of the heavy oil accommodated in the agitation tank 212.

Meanwhile, the ceramic catalyst 216 may also be provided inside the rotation shaft 214. In this case, even during an agitation process of the heavy oil, the wave energy radiated from the ceramic catalyst 216 accommodated in the rotation shaft 214 may crack the carbon-carbon bonds of the heavy oil, thereby significantly improving a yield of the light oil.

The heater 217 may be installed at the conical bottom of the agitation tank 212 and may heat the heavy oil and the ceramic catalyst 216. In this case, the heater 217 may be a heating wire using electrical energy, or a tube through which heated steam or liquid passes.

The carbon-carbon bonds of the heavy oil accommodated in the agitation tank 212 may be broken by the wave energy radiated from the ceramic catalyst 216, and the heavy oil may be heated by the heater 217 and converted into an oil vapor state. The generated oil vapor may be transferred to the first refiner 220 through the oil vapor discharge pipe 218, and the heavy oil that has not been vaporized may be discharged to the outside through the sludge discharge pipe 219.

As illustrated in FIG. 7, the first refiner 220 may include: a first refiner housing 221 defining an outer appearance thereof; an oil vapor inlet 222 provided at a lower portion of the housing 221 and configured to receive the oil vapor generated in the agitated oil vapor unit 210; a catalyst 226 accommodated inside the housing 221 and configured to induce production of the light oil; an oil vapor outlet 227 provided at an upper portion of the housing 221 and configured to discharge the generated oil vapor; and an inspection port 228 configured to observe the interior of the housing 221.

Moreover, the first refiner 220 may further include: a plurality of catalyst accommodation chambers 2236 stacked vertically; separation plates 2232 respectively disposed at upper portions of the catalyst accommodation chambers 2236; an outlet 2235 configured to discharge oil liquefied while passing through the ceramic catalysts; and a ceramic catalyst replacement port 2233 configured to replace the ceramic catalysts.

The oil vapor introduced through the oil vapor inlet 222 may collide with the separation plates 2232 while rising, and may be uniformly dispersed toward edge portions of the separation plates 2232, thereby increasing a contact area with the catalysts 226 inside the catalyst accommodation chambers 2236.

Since the plurality of catalyst accommodation chambers 2236 are stacked inside the housing 221, the oil vapor may come into contact with the plurality of catalysts 226. The catalysts 226 may be substantially identical to the ceramic catalysts accommodated in the catalyst units 116 of the wavelength decomposition unit 100 described above. That is, the catalysts 226 may include ceramic powder, fluoride powder, and thermoluminescent rare-earth phosphor material. The ceramic powder may include at least one ceramic powder selected from Al₂O₃, ZrO₂, and MgO. The fluoride powder may include at least one fluoride powder selected from LiF, MgF₂, and CaF₂. The thermoluminescent rare-earth phosphor material may include at least one phosphor material selected from terbium (Tb), cerium (Ce), europium (Eu), and dysprosium (Dy). The ceramic catalysts may be manufactured by mixing the ceramic powder, the fluoride powder, and the thermoluminescent rare-earth phosphor material to form a molded body, and sintering the molded body within a temperature range of 1300°C to 1450°C. Furthermore, the catalysts 226 may include a small amount of metallic catalyst components such as palladium (Pd), vanadium oxide (VOx), and titanium oxide (TiOx) in order to further activate the low-temperature cracking reaction.

The ceramic catalysts accommodated in the catalyst units 116 of the wavelength decomposition unit 100 may radiate wave energy having a short wavelength band when heated to a temperature of about 80°C to 350°C, and the radiated wave energy may partially crack the carbon-carbon chain bonds of the oil vapor. In contrast, the catalysts 226 of the first refiner 220 may perform a cracking action by the wave energy, and may come into direct contact with the oil vapor to crack the carbon-carbon bonds or promote the cracking of the carbon-carbon chain bonds. Specifically, the oil vapor generated in the agitated oil vapor unit 210 may be heated to a temperature of about 80°C to 350°C. The heated oil vapor may heat the catalysts 226. The wave energy having a short wavelength band may be radiated from the catalysts 226 to crack the carbon-carbon chain bonds of the oil vapor. Additionally, the direct contact between the oil vapor and the ceramic catalysts may further promote the cracking of the carbon-carbon bonds as described above. However, performance of the catalysts 226 may deteriorate with use, and therefore the catalysts 226 should be periodically replaced through the ceramic catalyst replacement port 2233.

The oil liquefied inside the housing 221 may be transferred to the second refiner 230 through the outlets 2235, and the oil vapor that has not been liquefied may continuously interact with the catalysts while continuing to rise. By repeating such processes, the liquefied oils may be transferred to the second refiner 230 through the outlets 2235. The oil vapor that has not been liquefied may be directly transferred to the cooler 240 through the oil vapor outlet 227.

As illustrated in FIG. 8, the second refiner 230 may include: a second refiner housing 231 defining an outer appearance thereof; an inlet pipe 232 penetrating an upper portion of the second refiner housing 231 and configured to introduce the oil generated in the first refiner 220; a plurality of catalysts 233 accommodated in sidewalls of the housing 231; a heater 234 configured to heat the catalysts 233 and the oil; a light oil outlet 235 configured to discharge the light oil that has passed through the catalysts 233; a ceramic catalyst replacement port 236 configured to replace the catalysts 233; a moisture outlet 237 configured to discharge moisture to the outside; and a spray 238 configured to spray the oil introduced through the inlet pipe 232.

The liquid-state oil generated in the first refiner 220 may be supplied to the upper portion of the second refiner 230 and introduced into the second refiner housing 231 through the inlet pipe 232. The oil inside the housing 231 may be cracked by the catalysts 233 disposed inside the housing 231.

Meanwhile, as illustrated in FIG. 8, the catalysts 233 may be inserted into the sidewalls of the housing 231, and at the same time, may also fill the interior space of the housing 231. In this case, the liquid-state oil may come into direct contact with the catalysts 233, and the spray 238 may spray oil, thereby increasing contact probability between the oil and the catalysts 233.

In this case, the catalysts 233 may be substantially identical to the catalysts 226 used in the first refiner 220 and may simultaneously perform physical cracking by the wave energy and catalytic cracking. Accordingly, the carbon-carbon bonds in the oil may be cracked once again, and higher-quality oil may be produced. Moreover, the catalysts 233 may include a plurality of pores on surfaces thereof, and impurities contained in the oil may be removed due to the pores. Moisture generated during the process may be discharged to the outside through the moisture outlet 237.

Meanwhile, since the catalysts 233 perform not only physical cracking but also catalytic cracking, performance thereof may deteriorate with use, and therefore the catalysts 233 may be periodically replaced through the ceramic catalyst replacement port 236.

The cooler 240 may receive the oil vapor generated in the first refiner 220 and the liquid-state oil generated in the second refiner 230. The cooler 240 may cool the oil vapor and the oil to generate the liquid-state light oil, and the generated light oil may be stored in the light oil storage tank 250.

The post-processing unit 300 may improve quality of the light oil produced from the high-viscosity crude oil sludge or may perform additional processes depending on a specific intended use. For example, the post-processing unit 300 may include: a desulfurizer configured to remove sulfur components contained in the light oil; an oil-water separator configured to further reduce moisture content of the light oil; and a flash point adjuster configured to increase a flash point of the light oil. The flash point adjuster may improve the flash point of the light oil by selectively removing substances having low flash points, such as naphtha, contained in the light oil.

As described above, the high-viscosity crude oil sludge refining apparatus according to exemplary embodiments of the present disclosure is capable of producing high value-added light oil by cracking carbon-carbon bonds of high-viscosity crude oil sludge, such as atmospheric residue (AR), using wave energy radiated from a catalyst. In particular, the high-viscosity crude oil sludge refining apparatus does not require regeneration of the catalyst since utilizing physical cracking using the catalyst, and is environmentally friendly because fossil fuels are not used. Furthermore, the high-viscosity crude oil sludge refining apparatus does not use expensive materials such as high-purity hydrogen, and has excellent economic efficiency because light oil may be produced even within a low-temperature range of about 80°C to 350°C.

### [EXPLANATION OF REFERENCE NUMERALS]

- 10:: High-Viscosity Crude Oil Sludge Refining Apparatus
- 100:: Wavelength Decomposition Unit
- 110:: Decomposition Furnace
- 120:: Condenser
- 130:: Heavy Oil Storage Tank
- 140:: Oil-Water Separator
- 150:: Blower
- 160:: Gas Injection Unit
- 200:: Separation Refining Unit
- 210:: Agitated Oil Vapor Unit
- 220:: First Refiner
- 230:: Second Refiner
- 240:: Cooler
- 250:: Light Oil Storage Tank
- 300:: Post-Processing Unit

## Claims

1. A high-viscosity crude oil sludge refining apparatus comprising:
a decomposition furnace configured to crack carbon-carbon bonds of atmospheric residue having a boiling point of 350°C or higher, produced in a crude distillation unit, and vaporize the atmospheric residue to generate oil vapor; and
a condenser configured to cool the oil vapor generated in the decomposition furnace through heat exchange to produce liquid-state heavy oil,
wherein the decomposition furnace comprises:
a housing having a decomposition space therein for accommodating the atmospheric residue, the decomposition space being selectively opened and closed by a door;
catalyst units installed on sidewalls of the housing and having a plurality of ceramic catalysts configured to radiate wave energy at a temperature within a range of 80°C to 350°C to physically crack the carbon-carbon bonds of the atmospheric residue; and
a plurality of heating wires installed inside the housing and configured to heat the atmospheric residue and the catalyst units by radiating heat using electrical energy,
wherein the ceramic catalysts include:
at least one ceramic powder selected from Al₂O₃, ZrO₂, and MgO;
at least one fluoride powder selected from LiF, MgF₂, and CaF₂;
at least one phosphor material selected from terbium (Tb), cerium (Ce), europium (Eu), and dysprosium (Dy); and
at least one metal selected from palladium (Pd), vanadium oxide (VOx), and titanium oxide (TiOx).

2. The high-viscosity crude oil sludge refining apparatus according to claim 1, wherein the ceramic catalysts are manufactured by mixing the ceramic powder, the fluoride powder, and the thermoluminescent rare-earth phosphor material to form a molded body, and sintering the molded body within a temperature range of 1300°C to 1450°C, and
wherein the wave energy radiated from the ceramic catalysts has energy ranging from 200 kJ/mol to 400 kJ/mol.

3. The high-viscosity crude oil sludge refining apparatus according to claim 2, further comprising:
a blower configured to forcibly discharge heated air into the decomposition space heated by the heating wires, cool the heated air discharged from the decomposition space through heat exchange with the condenser, and resupply the cooled air into the decomposition space.

4. The high-viscosity crude oil sludge refining apparatus according to claim 3, further comprising:
a sensor unit configured to monitor internal pressure of the decomposition furnace;
a gas tank storing inert gas; and
a control unit configured to receive pressure information measured by the sensor unit and selectively supply the inert gas stored in the gas tank into the decomposition furnace when pressure of the decomposition furnace falls below a predetermined pressure due to operation of the blower.

5. The high-viscosity crude oil sludge refining apparatus according to claim 4, wherein the heavy oil produced in the condenser has a carbon number of 24 to 60.

6. A high-viscosity crude oil sludge refining apparatus comprising:
a wavelength decomposition unit configured to produce heavy oil having a carbon number of 24 to 60 by physically cracking carbon-carbon bonds of atmospheric residue having a boiling point of 350°C or higher, produced in a crude distillation unit, using wave energy radiated from catalysts heated within a range of 80°C to 350°C; and
a separation refining unit configured to produce light oil having a carbon number of 10 to 18 from the heavy oil by simultaneously performing physical cracking by the catalysts on the heavy oil and catalytic cracking through direct contact between the catalysts and the heavy oil,
wherein the catalysts include:
at least one ceramic powder selected from Al₂O₃, ZrO₂, and MgO;
at least one fluoride powder selected from LiF, MgF₂, and CaF₂;
at least one phosphor material selected from terbium (Tb), cerium (Ce), europium (Eu), and dysprosium (Dy); and
at least one metal selected from palladium (Pd), vanadium oxide (VOx), and titanium oxide (TiOx),
wherein the catalysts radiate wave energy at a temperature within a range of 80°C to 350°C to crack the carbon-carbon bonds of the atmospheric residue and the heavy oil.

7. The high-viscosity crude oil sludge refining apparatus according to claim 6, wherein the wavelength decomposition unit comprises:
a decomposition furnace configured to crack and vaporize the carbon-carbon bonds of the atmospheric residue using the catalysts to generate oil vapor;
a condenser configured to cool the oil vapor generated in the decomposition furnace through heat exchange to produce liquid-state heavy oil; and
an oil-water separator configured to remove moisture contained in the heavy oil produced in the condenser,
wherein the decomposition furnace comprises:
a housing having a decomposition space therein for accommodating the atmospheric residue, the decomposition space being selectively opened and closed by a door;
catalyst units installed on sidewalls of the housing and having a plurality of ceramic catalysts configured to radiate wave energy having a wavelength of 200 nm to 700 nm at a temperature within a range of 80°C to 350°C to physically crack the carbon-carbon bonds of the atmospheric residue;
a plurality of heating wires installed inside the housing and configured to heat the atmospheric residue and the catalyst units by radiating heat using electrical energy; and
a blower configured to forcibly discharge the heated air in the decomposition space heated by the heating wires, cool the discharged heated air through heat exchange with the condenser, and resupply the cooled air into the decomposition space.

8. The high-viscosity crude oil sludge refining apparatus according to claim 7, wherein the decomposition furnace further comprises:
a sensor unit configured to monitor internal pressure of the decomposition furnace;
a gas tank storing inert gas; and
a control unit configured to receive pressure information measured by the sensor unit and selectively supply the inert gas stored in the gas tank into the decomposition furnace when pressure of the decomposition furnace falls below a predetermined pressure due to operation of the blower.

9. The high-viscosity crude oil sludge refining apparatus according to claim 8, wherein the separation refining unit comprises:
an agitated oil vapor unit configured to generate oil vapor from the heavy oil produced in the wavelength decomposition unit; and
a first refiner and a second refiner configured to refine and condense the oil vapor generated in the agitated oil vapor unit to produce light oil,
wherein the agitated oil vapor unit comprises:
an agitation tank configured to accommodate the heavy oil therein and having an inner bottom surface of a conical shape in which a height thereof gradually decreases from a central portion toward an edge portion thereof;
agitation blades rotatably connected to a rotation shaft penetrating the center of the agitation tank to agitate the heavy oil;
ceramic catalysts configured to radiate wave energy at a temperature within a range of 80°C to 350°C; and
a heater configured to heat the heavy oil and the ceramic catalysts.

10. The high-viscosity crude oil sludge refining apparatus according to claim 9, wherein the first refiner comprises:
a first refiner housing defining an outer appearance thereof;
an oil vapor inlet provided at a lower portion of the first refiner housing and configured to receive the oil vapor generated in the agitated oil vapor unit;
a plurality of catalyst accommodation chambers sequentially stacked upward from the oil vapor inlet and having ceramic catalysts configured to radiate wave energy having a short wavelength band at a temperature within a range of 80°C to 350°C; and
an outlet configured to supply oil liquefied while passing through the plurality of catalyst accommodation chambers to the second refiner, wherein the oil vapor introduced into the catalyst accommodation chambers comes into direct contact with the ceramic catalysts, and
wherein the second refiner comprises:
a second refiner housing defining an outer appearance thereof;
an inlet pipe penetrating an upper portion of the second refiner housing and configured to supply oil liquefied in the first refiner into the housing;
a plurality of ceramic catalysts accommodated inside the housing and configured to radiate wave energy having a short wavelength band at a temperature within a range of 80°C to 350°C;
a spray configured to spray the liquefied oil introduced through the inlet pipe toward the ceramic catalysts; and
a heater configured to heat the liquefied oil and the ceramic catalysts, wherein the liquefied oil supplied through the inlet pipe comes into direct contact with the ceramic catalysts.
